# FASCICULE DE BREVET EUROPEEN

(11) **EP 1 859 438 B1**
(45) Date de publication et mention de la délivrance du brevet: **14.09.2011**
(21) Numéro de dépôt: 06708544.9
(22) Date de dépôt: 27.02.2006
(51) Int. Cl.: G10L 15/22

(54) **PROCEDE DE MISE A DISPOSITION D'UN SERVICE VOCAL INTERACTIF SUR UNE PLATE-FORME ACCESSIBLE A UN TERMINAL CLIENT, SERVICE VOCAL, PROGRAMME D'ORDINATEUR ET SERVEUR CORRESPONDANTS**
VERFAHREN ZUR BEREITSTELLUNG EINES INTERAKTIVEN VOICE-DIENSTES AUF EINER EINEM CLIENT-ENDGERÄT ZUGÄNGLICHEN PLATTFORM ENTSPRECHENDER VOICE-DIENST, COMPUTERPROGRAMM UND SERVER
METHOD FOR PROVIDING AN INTERACTIVE VOICE SERVICE ON A PLATFORM ACCESSIBLE TO A CLIENT TERMINAL, CORRESPONDING VOICE SERVICE, COMPUTER PROGRAMME AND SERVER

(30) Priorité: 18.03.2005 FR 0502743
(43) Date de publication de la demande: 28.11.2007
(73) Titulaire: FRANCE TELECOM, 75015 Paris (FR)
(72) Inventeur: PAILLET, Eric, F-22730 Tregastel (FR); TEZE, Vincent, F-29870 Landeda (FR); GYSS, Jean François, F-22300 Rospez (FR)
(74) Mandataire: Bioret, Ludovic
(86) Numéro de dépôt international: PCT/EP2006/060314
(87) Numéro de publication internationale: WO 2006/097402

(56) Documents cités:
- EP-A- 0 848 373
- WO-A-02/091364
- FR-A- 2 835 999
- US-A1- 2003 078 779
- BALL T ET AL: "SPEECH-ENABLED SERVICES USING TELEPORTAL SOFTWARE AND VOICEXML" BELL LABS TECHNOLOGY, BELL LABORATORIES, MURREY HILL, NJ, US, vol. 5, no. 3, juillet 2000 (2000-07), pages 98-111, XP000975485 ISSN: 1089-7089
- BOB CARPENTER SASHA CASKEY KRISHNA DAYANIDHI CAROLINE DROUIN ROBERTO PIERACCINI SPEECHWORKS INTERNATIONAL ET AL: "A Portable, Server-Side Dialog Framework for VoiceXML", ICSLP 2002 : 7TH INTERNATIONAL CONFERENCE ON SPOKEN LANGUAGE PROCESSING. DENVER, COLORADO, SEPT. 16 - 20, 2002; [INTERNATIONAL CONFERENCE ON SPOKEN LANGUAGE PROCESSING. (ICSLP)], ADELAIDE : CAUSAL PRODUCTIONS, AU, 16 September 2002 (2002-09-16), page 2705, XP007011720, ISBN: 978-1-876346-40-9
- Juan Huerta, David Lubensky, David Nahamoo, Roberto Pieraccini, T.V. Raman and Charle Wiecha: "Mainstreaming speech-enabled Web applications.", IBM T.J. Watson Research Center , 1 September 2004 (2004-09-01), Retrieved from the Internet: URL:ftp://ftp.software.ibm.com/software/pe rvasive/info/products/voice_server/Mainstr eamSpeechEnabledWebApps-Whitepaper.pdf [retrieved on 2010-09-14]
- BOB CARPENTER SASHA CASKEY KRISHNA DAYANIDHI CAROLINE DROUIN ROBERTO PIERACCINI SPEECHWORKS INTERNATIONAL ET AL: "A Portable, Server-Side Dialog Framework for VoiceXML" ICSLP 2002 : 7TH INTERNATIONAL CONFERENCE ON SPOKEN LANGUAGE PROCESSING. DENVER, COLORADO, SEPT. 16 - 20, 2002; [INTERNATIONAL CONFERENCE ON SPOKEN LANGUAGE PROCESSING. (ICSLP)], ADELAIDE : CAUSAL PRODUCTIONS, AU, 16 September 2002 (2002-09-16), page 2705, XP007011720 ISBN: 978-1-876346-40-9
- Juan Huerta, David Lubensky, David Nahamoo, Roberto Pieraccini, T.V. Raman and Charle Wiecha: "Mainstreaming speech-enabled Web applications." IBM T.J. Watson Research Center 1 September 2004 (2004-09-01), Retrieved from the Internet: URL:ftp://ftp.software.ibm.com/software/pe rvasive/info/products/voice_server/Mainstr eamSpeechEnabledWebApps-Whitepaper.pdf [retrieved on 2010-09-14]

## Description

### 1. Domaine de l'invention

Le domaine de l'invention est celui des services vocaux interactifs, auxquels un utilisateur peut accéder à partir d'un téléphone fixe, d'un téléphone portable ou d'un ordinateur mettant en oeuvre la technologie de la voix sur IP.

Plus précisément, l'invention concerne de tels services basés sur l'utilisation de pages VoiceXML (qui est un langage XML (pour « eXtended Markup Language ») tel que décrit dans « VoiceXML Version 2.0 Specification W3C Recommendation », 16 Mars 2004, http://www.w3.org/TR/voicexm120/, normalisé au W3C, pour « World Wide Web Consortium », et définissant des interactions vocales) ou de tout autre formalisme équivalent, par exemple : SALT (pour Speech Applications Language Tags) tel que décrit dans « Speech Applications Language Tags 1.0 Specification », 15 Juillet 2002, http://www.saltforum.org/default.asp, X+V (pour XHTML et Voice, X+V étant un format de description d'interactions multimodales) tel que décrit dans «XHTML+Voice Profile 1.0 Specification W3C Note », 21 Décembre 2001, http://www.w3.org/TR/xhtml+voice,....

À titre d'exemple, le centre d'appel Service Clients Wanadoo (marque déposée) apporte une assistance technique aux utilisateurs Wanadoo (marque déposée) par le biais d'un service vocal interactif. Ce service vocal interactif reçoit les appels des utilisateurs, puis les aiguille vers un service ou un conseiller technique approprié. Un tel service vocal permet en outre de fournir une information à un utilisateur, sans intervention d'un conseiller technique.

### 2. Solutions de l'art antérieur

Une technique bien connue permettant de concevoir et développer des services vocaux interactifs repose sur l'utilisation de pages VoiceXML.

Un document VoiceXML définit des interactions vocales et/ou sonores entre un utilisateur (depuis son téléphone par exemple) et une plateforme de mise en oeuvre d'un service vocal donné devant être conduit par l'interpréteur VoiceXML situé dans la plateforme. Une session utilisateur consiste ainsi en plusieurs dialogues chargés par la plateforme selon les réponses de l'utilisateur.

Bien que certains des formats de description de services vocaux interactifs soient standardisés et aient atteint une maturité industrielle (par exemple la version 2.0 du VoiceXML), peu de fournisseurs de plateforme intègrent l'ensemble des recommandations des normes (VoiceXML, SALT, X+V,...).

Dans certains cas, certains comportements diffèrent d'un fournisseur de plateforme à l'autre, soit car la norme a été interprétée différemment, soit car la plateforme n'est pas à niveau, i.e. qu'elle ne respecte pas toutes les exigences de la norme. Ainsi, malgré ces formats de description standardisés, il n'existe pas encore de compatibilité totale entre plateformes.

De plus, ces formats standardisés n'offrent en général pas de fonctionnalités spécifiques (traitement du langage naturel, reroutage des appels, etc...), ce qui nécessite des développements supplémentaires plus ou moins complexes sur les plateformes.

Enfin, dans la plupart des cas, l'utilisation de ces formats standardisés seuls, en particulier de pages VoiceXML, est insuffisante car les langages qui leur sont associés, souvent interprétés, ne proposent qu'une solution pour décrire des interactions avec des ressources vocales (diffusion de prompts enregistrés ou synthétisés, reconnaissance vocale) mais ne permettent pas de décrire la structure d'un dialogue ni même les interactions avec le système d'information. Par prompt, on entend, selon une définition communément admise, tout type de guides sonores diffusés à l'utilisateur. Ces guides sonores pouvant être générés par un module de synthèse vocale (TTS pour « Text To Speech ») ou avoir été enregistrés au préalable dans un fichier.

Il faut donc, la plupart du temps, compléter avec des composants logiciels (par exemple des « servlets », ou « modules d'extension des fonctions du serveur d'application ») et des pages dynamiques (par exemple des JSP, pour « Java Server Page », qui est un standard permettant de développer des applications dont le contenu est dynamique) sur le serveur d'application (jouant le rôle de système d'information) pour définir complètement le service vocal interactif.

Tous ces points induisent une complexité certaine lors de la conception, la mise en oeuvre ou encore la maintenance des différents composants des services vocaux interactifs.

Cette complexité se caractérise en particulier par une imbrication forte des données concernant la présentation des informations avec celles qui sont utilisées pour les traitements et les transitions entre les différents états du dialogue du service vocal.

Les documents **D1** : DESAI (US 2003/078779 A1), **D2** : BALL « SPEECH-ENABLED SERVICES USING TELEPORTAL SOFTWARE ND VOICE XML », **D3** : SIEMENS (EP 0 848 373 A), **D4** : UNYSYS CORPORATION (WO 02/091364 A1) et **D5** : FRANCE TELECOM (US 2005/091958) illustrent l'état de la technique antérieur.

Le document **D1** décrit l'architecture d'un serveur de réponse vocal nommé « Anita ». Il décrit également une méthode de navigation dans les différents noeuds composant un réseau à partir de ce serveur.

Le document **D2** est un article de presse concernant un système nommé « TelePortal ». Ce système met en oeuvre un cadre de développement des services vocaux interactifs qui intègre une séparation entre la logique métier et la présentation de l'information, de la même manière que cela est réalisé depuis longtemps dans les systèmes « classiques » par l'utilisation du design pattern MVC.

Le document **D3** décrit une méthode et un système permettant de convertir des documents HTML en informations utilisables par les services vocaux interactifs afin de proposer un portage dynamique des contenus des pages web sous une forme sonore.

Le document **D4** concerne un système client/serveur permettant de tenir une conversation avec un utilisateur par le biais d'une interface téléphonique. La partie cliente du système embarque un navigateur capable d'interpréter les documents VoiceXML. La partie serveur du système inclut un interpréteur de flot de dialogue (DFI) qui utilise les informations fournies par le client pour générer, dynamiquement, des réponses à destination de l'utilisateur. Les fichiers générés inclus des « prompts », des fichiers de grammaires et d'autres informations.

Le document **D5** concerne la mutualisation de la création des services vocaux afin de permettre une création et une maintenance aisée des services. Ce document fournit une méthode de création de services vocaux interactifs qui est simple et ne nécessite pas de connaissances approfondies.

Les documents **D6** (BOB CARPENTER SASHA CASKEY KRISHNA DAYANIDHI CAROLINE DROUIN ROBERTO PIERACCINI SPEECHWORKS INTERNATIONAL ET AL: "A Portable, Server-Side Dialog Framework for VoiceXML "ICSLP 2002: 7TH INTERNATIONAL CONFERENCE ON SPOKEN LANGUAGE PROCESSING. DENVER, COLORADO; (ICSLP), ADELAIDE : CAUSAL PRODUCTIONS, AU, 16 septembre 2002 (2002-09-16), page 2705, X P0070117201 S B N : 978-1-876346-40-9) et **D7** (Juan Huerta, David Lubensky, David Nahamoo, Roberto Pieraccini, T.V. Raman and Charle Wiecha: "Mainstreaming speech-enabled Web applications." IBM T.J. Watson Research Center, de décembre 2004 (2004-12-14), sont également des documents non brevets qui illustrent l'état de la technique antérieur.

Le document **D6** porte sur un framework de développement d'applications vocales. Le document **D7** porte également sur un framework de développement d'applications vocales.

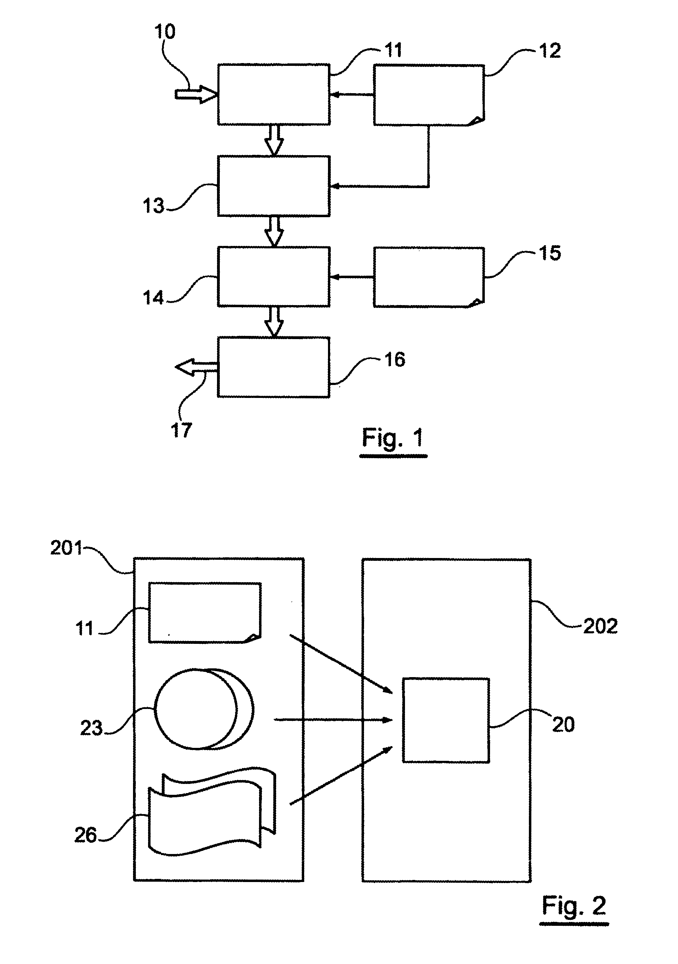

En particulier, **D6** décrit un fichier de description de service vocal dans la section "ETUDE DIALOG MANAGER". Ce fichier de description est présenté au format UML (fig.2). Un fichier au format VoiceXML est aussi produit en utilisant des servlets génériques pour la gestion standard du dialogue, des actions et des erreurs (cf. section REPEAT AND BACKUP). La gestion du dialogue se fait aussi en générant des pages de type JSP, et une servlet "générique" de type "Application" est utilisée pour les composants logiciels spécifiques (dialog-specific server-side resources). Dans **D7**, on retrouve aussi p.6, 1er et 2nd paragraphes les outils nécessaires pour construire des composants logiciels spécifiques à partir des composants génériques.

### 3. Objectifs de l'invention

L'invention a notamment pour objectif de pallier ces inconvénients de l'art antérieur.

Plus précisément, un objectif de l'invention est de fournir une technique d'implémentation de services vocaux interactifs qui permette de décrire ces services de manière simple, lisible et générique.

Un autre objectif de l'invention est de fournir une telle technique qui permette de décrire la structure des dialogues et les interactions avec le système d'information de manière simple et efficace.

Un autre objectif de l'invention est de proposer une telle technique qui permette de simplifier la conception, la mise en oeuvre, la maintenance et les évolutions des services vocaux interactifs.

Encore un autre objectif de l'invention est de proposer une telle technique qui permette de réduire notablement le temps de développement d'un service vocal interactif.

L'invention a encore pour objectif de fournir une telle technique qui permette d'éviter une imbrication forte des données de présentation avec celles qui sont utilisées pour les traitements et les transitions entre les différents états des dialogues des services vocaux.

Encore un autre objectif de l'invention est de proposer une telle technique qui permette de prendre en charge de manière automatique au moins une partie des services vocaux interactifs.

### 4. Caractéristiques essentielles de l'invention

Ces objectifs, ainsi que d'autres qui apparaîtront par la suite, sont atteints à l'aide d'un procédé de mise a disposition d'un service vocal interactif, parmi un ensemble de services vocaux interactifs, sur une plate-forme accessible a un terminal client, tel que décrit en relation avec les revendications 1 à 7.

L'invention concerne également un serveur selon la revendication 9 pour la mise en oeuvre du procédé revendiqué, ainsi qu'un produit programme d'ordinateur selon la revendication 8.

Ainsi, on prévoit avantageusement d'isoler la partie générique d'un service vocal interactif dans un fichier de description.

Par partie générique, on entend tous les éléments simples et statiques du service, tels que les guides sonores (sans parties dynamiques), les fichiers de grammaires et les transitions simples ou entièrement décrites.

En effet, il existe, dans la grande majorité des services vocaux, des éléments simples et récurrents qui peuvent être isolés pour décrire une partie des services de façon générique. L'invention propose de décrire cette partie générique dans un fichier de description du service, qui peut par exemple être au format XML.

La présente invention propose également de déporter les éléments dynamiques ou complexes d'un service vocal interactif dans des composants logiciels spécifiques (par exemple dans des servlets, des JSP,...) qui sont références dans un fichier de description des lors qu'une partie du service est dynamique ou complexe (cas des messages composes par exemple).

En outre, l'invention propose d'automatiser tout ou partie de la mise en oeuvre des services vocaux, d'en faciliter la maintenance et les mises à jour, en utilisant un moteur de phases qui regroupe tous les composants logiciels simples permettant le traitement des parties génériques décrites dans le fichier de description.

Par moteur de phases générique, on entend que le moteur de phases est réutilisable tel quel et sans adaptation pour différents services vocaux.

Selon un aspect avantageux de l'invention, ledit fichier de description associé audit service comprend :
- au moins un élément statique dudit service interprétable par ledit moteur de phases ; et/ou
- au moins un référencement vers ledit au moins un second composant logiciel, spécifique audit service, permettant de générer au moins un élément dynamique et/ou complexe dudit service.

Ainsi, le fichier de description du service permet de décrire l'intégralité du service, soit de manière directe pour les éléments statiques, soit en faisant appel à des composants logiciels dédiés pour les éléments dynamiques ou complexes tels que, par exemple, des messages composés, des interactions avec un système d'information,.....

De façon préférentielle, ledit second composant logiciel génère dynamiquement au moins une page de dialogue à partir d'au moins un standard prédéterminé.

Ainsi, le second composant logiciel peut mettre en oeuvre des technologies (ou standards) telles que JSP (pour « Java Server Page »), ASP (pour « Active Server Pages »), CGI-BIN (pour « Common Gateway Interface-Binary ») ou PHP (pour « Personal Home Page »), ou tout autre technologie équivalente.

De façon avantageuse, ledit moteur de phases comprend des moyens de :
- décodage dudit fichier de description associé audit service ;
- fourniture d'une liste d'au moins un prompt ;
- génération d'au moins une transition d'état dudit service ;
- chargement d'au moins une grammaire ;
- délégation d'au moins un traitement audit second composant logiciel spécifique.

Préférentiellement, ledit moteur de phases comprend :
- au moins une première servlet générique permettant le décodage dudit fichier de description associé audit service lors de ladite étape d'interprétation ;
- au moins une page dynamique générique de type JSP générant une page de dialogue dudit service en fonction d'un état courant dudit dialogue ;
- au moins une deuxième servlet générique dérivant de ladite première servlet générique et permettant :
- de fournir ledit état courant à ladite page dynamique générique ;
- de déléguer un traitement audit second composant logiciel spécifique.

Avantageusement, ledit moteur de phases comprend également un fichier de description de caractéristiques de ladite plate-forme.

Dans un mode de réalisation préférentiel de l'invention, ledit procédé est mis en oeuvre dans un serveur qui réalise également, sur requête de ladite plate-forme, une étape de génération d'au moins une page de dialogue dudit service à partir de certains au moins desdits éléments suivants :
- au moins un desdits éléments statiques ;
- au moins un desdits éléments dynamiques et/ou complexes ;
- au moins une caractéristique de ladite plate-forme, extraite dudit fichier de description de caractéristiques de ladite plate-forme.

De façon avantageuse, lesdites pages de dialogue sont générées dynamiquement selon au moins un formalisme de description d'interactions prédéterminé.

Par formalisme de description d'interactions, on entend tout type de langages permettant de définir des interactions (de type vocales, multimodales, etc...), par exemple, VoiceXML, SALT, X+V, XML ou tout autre formalisme équivalent.

L'invention concerne également un service vocal interactif accessible à un terminal client sur une plate-forme d'un réseau de communication, défini au moyen d'un fichier de description comprenant :
- au moins un élément statique interprétable par un moteur de phases, comprenant au moins un premier composant logiciel, et générique pour au moins deux services vocaux distincts ; et/ou
- au moins un référencement vers au moins un second composant logiciel, spécifique audit service, permettant de générer au moins un élément dynamique et/ou complexe dudit service.

L'invention concerne en outre un produit programme d'ordinateur comprenant des instructions de code de programme pour l'exécution des étapes du procédé précité, lorsque ledit programme est exécuté dans et/ou par un processeur.

L'invention concerne aussi un serveur comprenant des moyens de génération d'au moins une page de dialogue d'un service vocal interactif, parmi un ensemble de services vocaux interactifs, accessible sur une plate-forme à un terminal client, et comprenant des moyens de commande d'un moteur de phases, comprenant au moins un premier composant logiciel, générique pour ledit ensemble de services vocaux interactifs, et au moins un second composant logiciel spécifique audit service, lesdits moyens de commande permettant l'interprétation par ledit moteur de phases d'un fichier de description associé audit service, de façon à permettre ladite génération de ladite page de dialogue.

### 5. Liste des figures

D'autres caractéristiques et avantages de l'invention apparaîtront plus clairement à la lecture de la description suivante d'un mode de réalisation préférentiel, donné à titre de simple exemple illustratif et non limitatif, et des dessins annexés, parmi lesquels :
- la figure 1 est un organigramme illustrant de manière globale un procédé de mise à disposition d'un service vocal interactif selon un mode de réalisation préférentiel de l'invention ;
- la figure 2 est un schéma simplifié illustrant le procédé de mise à disposition d'un service vocal interactif de la figure 1 ;
- la figure 3 présente un schéma illustrant le fonctionnement du serveur d'application lors de la mise en oeuvre du procédé de mise à disposition d'un service vocal interactif de la figure 1 ; et
- la figure 4 présente la structure d'un mode de réalisation particulier d'un service vocal selon l'invention.

### 6. Description de l'invention selon un mode de réalisation préférentiel

### 6.1 Présentation générale de l'invention

L'invention repose sur l'observation suivante : les éléments de base des langages de description standards (souvent les mieux supportés par les différents fournisseurs de plateforme et qui constituent le plus petit dénominateur commun pour la compatibilité) sont aussi les éléments les plus utilisés par les services vocaux.

Ainsi, bien qu'il soit difficile de réaliser un service vocal interactif de façon générique, il existe, dans la grande majorité des services vocaux interactifs, des éléments simples et récurrents qui peuvent être isolés pour décrire une partie du service vocal de façon générique, les autres éléments, dits spécifiques, formant une partie spécifique du service vocal.

C'est pour cette raison, que l'invention propose de décrire cette partie générique d'un service vocal interactif dans un fichier de description du service (autrement appelé fichier de description de la partie générique du service), qui est, par exemple, au format XML.

Les éléments dynamiques ou complexes au service vocal sont alors déportés dans des composants logiciels (par exemple dans des servlets) qui sont référencés dans le fichier de description du service vocal interactif dès lors qu'une partie du service est dynamique ou complexe (cas des messages composés par exemple).

Une partie du service est prise en charge par un composant spécifique dès lors qu'elle est dynamique, complexe ou qu'elle nécessite des traitements qui ne pourront pas être effectués par les langages de description standardisés (par exemple le langage VoiceXML) tels que les interactions avec le système d'information ou des modules logiciels effectuant des calculs lourds comme les très grands vocabulaires ou le langage naturel.

Ainsi, le service est composé de deux types de composants logiciels :
- des composants simples (par exemple des servlets, ci-après désignées servlets génériques) permettant le traitement des parties génériques décrites dans le fichier de description ;
- des composants spécifiques au service (par exemple des servlets, ci-après désignées servlets spécifiques).

En conséquence, la solution de l'invention permet, à partir d'éléments de description du service (le fichier de description du service) dans un format prédéfini et d'une suite d'outils adaptés (par exemple des servlets), d'automatiser tout ou partie de la mise en oeuvre d'un service vocal, d'en faciliter la maintenance et les mises à jour.

Le procédé de l'invention permet :
- de décrire le service vocal de manière lisible et générique ;
- de prendre en charge les éléments génériques de manière automatique ;
- de faciliter la maintenance et les évolutions du service vocal ;
- de disposer d'une architecture souple et évolutive ;
- de diminuer le temps de développement du service vocal interactif, grâce à la conception d'une partie générique commune à tous les services vocaux.

### 6.2 Mode de réalisation préférentiel de l'invention

On présente, en relation avec la figure 1, un organigramme illustrant de manière globale un procédé de mise à disposition d'un service vocal interactif selon un mode de réalisation préférentiel de l'invention. Ce procédé est mis en oeuvre dans un serveur d'application relié à une plateforme, via un réseau de communication, qui permet d'exécuter des pages VoiceXML d'un dialogue du service vocal.

À la réception d'une requête 10 utilisant le protocole http (pour «HyperText Transfer Protocol » ou « Protocole de transfert hypertexte ») demandant la génération d'une page VoiceXML et provenant de la plateforme, une servlet générique du moteur de phase réalise un décodage des informations statiques 11 comprises dans un fichier 12 de description du service vocal interactif. Le fichier de description du service vocal est écrit en langage XML.

L'invention propose donc d'utiliser un formalisme de description très simple permettant de décrire les éléments statiques du service et l'enchaînement des actions ou des transitions.

Ensuite, si le service nécessite la mise en oeuvre d'un traitement dynamique ou complexe, le fichier de description du service comprend un ou plusieurs référencements à une ou plusieurs servlets spécifiques, et une servlet générique délègue le traitement dynamique ou complexe correspondant à ces servlets spécifiques qui réalisent un décodage des informations dynamiques 13.

Ainsi, les éléments dynamiques sont également pris en charge par le serveur d'application, le traitement correspondant (action, génération de guides dynamiques, transition, traitement avancé des événements de reconnaissance vocale, etc...) étant référencé dans le formalisme de description constitué par le fichier de description du service. On utilise ainsi le langage Java dans un environnement (ou architecture) N-tiers pour les traitements, dans lequel chaque serveur effectue une tâche spécialisée (par exemple serveur web, serveur de base de données...).Une résolution des caractéristiques dépendantes de la plateforme 14 au moyen d'un fichier de description des caractéristiques des plateformes 15 est ensuite mise en oeuvre. Le fichier de description des caractéristiques des plateformes est également au format XML.

On rappelle que les caractéristiques de la plate-forme sont exploitées par une page JSP (par une page JSP générique ou par une page JSP spécifique) au moment de la génération de la page VoiceXML. Les caractéristiques propres à chaque plate-forme susceptible d'être accédée sont stockées dans un fichier (appelé fichier de description des caractéristiques de la plateforme). Ces caractéristiques définissent en particulier le format de fichiers sonores acceptés par la plate-forme ou encore le format des modèles supportés pour les grammaires vocales.

Toutes les données propres à la plate-forme sont remplacées par des éléments génériques dont la résolution se fait au dernier moment par l'intermédiaire de données de configuration du logiciel.

Enfin, une page dynamique générique, qui est une page JSP (pour Java Server Page) générique, ou, si besoin est, une page dynamique spécifique, qui est une page JSP spécifique, procèdent à la génération de la ou des pages VoiceXML demandées 16. La ou les pages générées sont ensuite envoyées 17 à la plateforme.

Les éléments utiles à la plateforme (notamment les pages VoiceXML) sont donc générés à la demande sur le serveur d'application à partir des éléments statiques, des traitements dynamiques et de la résolution des caractéristiques dépendantes de la plateforme.

La génération de ces éléments est réalisée par un module logiciel qui définit un traitement par défaut et dont le comportement peut être surchargé (adapté) par le développeur du service vocal interactif au moyen de mécanismes propres aux langages objets. Cette surcharge du comportement permet au développeur de réaliser les traitements spécifiques nécessaires à l'élaboration des pages dynamiques.

De cette façon, le développeur du service dispose d'un moyen lui permettant de ne se concentrer que sur les parties dynamiques du service, le reste étant géré par le fichier de description générique et le moteur de phases.

On mutualise donc les traitements de façon très simple ce qui permet de réduire les coûts de mise en oeuvre et de maintenance des services vocaux.

En outre, le formalisme de description et les outils utilisés par l'invention pourront permettre de prendre en compte les aspects de multi modalités d'un service.

Tel qu'illustré par la figure 2 qui présente un schéma simplifié du procédé de mise à disposition d'un service vocal interactif de la figure 1, la solution proposée par l'invention comprend deux types de composants :
- un premier type de composant 201 de définition du service vocal interactif au moyen d'un fichier de description du service 12 au format XML, d'un ensemble de servlets spécifiques 23 et d'une page JSP spécifique 26 et
- un second type de composant 202 d'exécution du service vocal, mettant en oeuvre un ensemble de composants logiciels (regroupés sous la dénomination de moteur de phases 20) comprenant des servlets génériques, une page JSP générique et le fichier de description des caractéristiques des plateformes, permettant de prendre en charge de manière automatique les éléments précités définissant le service.

On décrit ci-après le fichier 12 de description du service précité.

L'idée est de ne référencer dans ce fichier de description du service que les éléments simples et figés comme les guides sonores (s'ils ne contiennent pas de parties dynamiques), les fichiers de grammaires ou encore les noms des servlets spécifiques chargées de réaliser les transitions.

Dès lors qu'un élément ou qu'une transition peut être entièrement décrit de manière unique et non-ambiguë, il peut être référencé dans le fichier de description.

Dans tous les autres cas, le fichier de description du service fait appel à des servlets spécifiques qui sont chargées de la production des éléments dynamiques et/ou conditionnels (par exemple des guides sonores conditionnés par des données de contexte, des guides sonores dont le contenu est dynamique, des transitions conditionnées par des données de contexte, etc...).

On obtient ainsi une description du service vocal interactif lisible (donc adaptée à la maintenance ou aux évolutions de manière simple) et facile à générer de manière automatisée.

On présente en annexe 1, un exemple du contenu du fichier de description du service. Cette annexe fait partie intégrante de la présente description.

Cet exemple décrit deux phases qui sont « Bienvenue » et « Menu ». Ces deux phases décrivent des interactions de type vocal (matérialisées dans le fichier par « <MEDIA type="VOICE" id=" 1 "> »). Une extension du formalisme est ainsi envisagée pour pouvoir décrire des interactions concernant d'autres media et plus généralement, pour les applications multimodales.

Dans la phase « Bienvenue », le système commence par diffuser un guide sonore (dont l'identifiant est 236) en ne permettant pas à l'utilisateur d'interrompre le guide avant la fin (ce qui se traduit dans le fichier par « bargein="false" »). Le texte associé au guide dans le fichier de description du service est donné pour le cas où le système ne trouverait pas l'identifiant dans un fichier d'indexation des guides.

Le fichier d'indexation des guides associe chaque identifiant à un fichier son à diffuser et à un texte à synthétiser si le fichier est inaccessible. Dans ce cas, le texte « Bienvenue sur le service vocal » serait diffusé en synthèse vocale.

Ensuite, le système effectue un branchement vers une servlet spécifique dénommée « VxmlServletSuiteBienvenue » qui est chargée de générer la page VoiceXML suivante.

Dans la phase « Menu », le système effectue les tâches suivantes :
- Appel d'une servlet spécifique appelée « VxmlServletGuideMenu » chargée de la diffusion d'un ou de plusieurs prompts (guides sonores) ;
- Chargement d'une grammaire « gram_etoile » (de type DTMF, pour Dual Tone Multi Frequency) ;
- Chargement d'une grammaire « recol.srg » (de type Reconnaissance vocale) ;
- Choix de la transition à activer.

Il est possible d'ajouter des attributs pour les guides et les grammaires en plus de ceux directement gérés par le formalisme. Pour ce faire, une mise à jour d'une DTD (« Document Type Definition » pour « définition du type de document ») suffit car tous les attributs non gérés directement par le formalisme (par exemple les identifiants, type de grammaire, ...) seront repris tels quels dans la page VoiceXML générée.

Le passage d'un état à un autre est défini par l'élément « <TRANSITION> » de l'état courant et peut se faire de plusieurs façons.

Le passage peut se faire directement vers un autre état du service, dans ce cas, la servlet générique non abstraite décrite ci-après est appelée par la page JSP générique lorsque l'élément « <SUBMIT> » est évalué.

On peut également définir l'état suivant par une servlet qui sera appelée par la page JSP lorsque l'élément « <SUBMIT> » est évalué.

On peut aussi définir l'état suivant par des conditions qui peuvent être de plusieurs types:
- Evènement « NO INPUT » (pas d'action de l'utilisateur) ;
- Evènement « NO MATCH » (action non traitée par le système) ;
- Condition sur l'état précédent ;
- Condition gérée par une servlet auquel cas le traitement de l'état est délégué à cette servlet ;
- Condition sur un événement nommé (par exemple "connection disconnect" ou "error") : sa priorité d'évaluation est dépendante du formalisme utilisé en sortie (VoiceXML ou autre) ;
- Condition par défaut : elle n'est évaluée que si toutes les autres conditions sont fausses ;
- Condition sur événement de reconnaissance de type vocal ou DTMF.

Chaque condition (la condition gérée par une servlet) contient à son tour un élément « <TRANSITION> » qui est pris en compte si la condition est remplie.

On peut remarquer que le nombre de délégations pour les servlets est empiriquement limité à 2 (c'est-à-dire qu'une servlet qui a déjà été appelée directement depuis une autre servlet ne pourra pas à son tour déléguer le traitement à une autre servlet). Bien que cela permette de couvrir la très grande majorité des cas, cela peut imposer des restrictions sur l'écriture du fichier de description du service.

On décrit ci-après les servlets spécifiques et la page JSP spécifique précités.

On rappelle que dans certains cas, il peut être nécessaire de faire appel à des composants logiciels pour traiter les données dynamiques, pour faire appel à des traitements externes au système, pour accéder à une base de données, etc...

Ces composants logiciels sont implémentés sous la forme des servlets spécifiques et de la page JSP spécifique.

Les composants logiciels peuvent par exemple avoir la charge de générer des guides sonores dynamiques (dont le contenu dépend par exemple de l'heure courante) ou encore de déterminer la page VoiceXML suivante à diffuser en fonction d'éléments comme le résultat d'une analyse sémantique, la valeur d'un paramètre contenu dans une base de données, etc...

Ainsi, la partie spécifique du service se compose de l'ensemble des servlets spécifiques et de la page JSP spécifique. Les servlets spécifiques sont référencées dans le fichier de description du service dans l'étape qui correspond au traitement spécifique.

Les servlets spécifiques dérivent des servlets génériques de façon à pouvoir traiter sans réécriture de code toute la partie générique de l'étape correspondante. Seule la partie de traitement du résultat de la grammaire nécessite l'écriture de code, ceci se fait dans la méthode getNextState.

On rappelle que la méthode getNextState() permet de déterminer le prochain état dans la description du service, ie. la prochaine transition.

On obtient ainsi, grâce à l'utilisation des concepts d'héritage et de surcharge des langages objets (Java), une simplification des traitements spécifiques.

Les états qui chargent une grammaire devront utiliser une servlet spécifique pour la transition. Cette servlet spécifique permet de récupérer le résultat de la grammaire, d'en faire l'analyse et de faire la transition vers l'état correspondant.

Dans la majorité des cas les servlets spécifiques sont utilisées :
- pour gérer la liste des prompts à jouer, dans ce cas seule la méthode créant cette liste est à redéfinir ;
- pour gérer une transition, dans ce cas seule la méthode retournant le nom de l'état suivant est à redéfinir.

Il est possible dans le fichier de description du service d'indiquer certains attributs avec des noms de constantes (par exemple : timeout="T0") pour les guides audio et pour les grammaires. Dans ce cas, une servlet spécifique déterminée (ou une des classes de la hiérarchie) doit définir une variable nommée T0.

Lors de l'appel à getGuidesFromDescriptionState, la servlet générique (qui fait partie de la hiérarchie de la servlet spécifique déterminée) recherche la constante nommée T0 par le mécanisme de réflexion ou d'introspection (mécanisme de la programmation objet permettant de découvrir les méthodes et variables accessibles sur un objet particulier, sans connaissances a priori sur cet objet). Si cette constante est trouvée, c'est sa valeur qui est utilisée, sinon la valeur T0 est laissée comme valeur de l'attribut.

Il est à noter que la méthode getGuidesFromDescriptionState() permet de rechercher les guides sonores à diffuser à partir de la description de l'état courant dans le fichier de description du service.

On décrit ci-après le moteur de phase précité.

On utilise des pages VoiceXML rudimentaires comprenant :
- la diffusion de guide(s) ;
- le chargement de grammaires DTMF ou de reconnaissance vocale ;
- l'attente d'une action d'un utilisateur ;
- l'émission d'une requête vers le serveur d'applications pour obtenir la page VoiceXML suivante.

L'utilisation de pages rudimentaires s'impose dès lors que l'on veut réaliser des traitements particuliers entre deux interactions de l'utilisateur. C'est le cas par exemple en langage naturel quand on doit faire une analyse sémantique de la phrase retournée par le moteur de reconnaissance afin de décider quelle est la phase suivante à activer.

Ces pages rudimentaires permettent également de réduire le nombre de tags (ou marqueurs) VXML utilisés et donc de limiter les risques sur la compatibilité entre les différentes plates-formes.

La partie générique peut être interprétée par un ensemble de servlets génériques réutilisables pour tous les services. Ces servlets génériques sont capables d'interpréter le fichier de description du service lorsqu'il ne référencie pas de servlets spécifiques. Dans le cas où une servlet spécifique est référencée, les servlets génériques sont capables de déléguer le traitement à cette servlet spécifique.

Le moteur de phases se base principalement sur deux servlets génériques et sur la page JSP générique précitée.

Le moteur de phase comprend une première servlet générique qui permet la lecture et le décodage du fichier de description du service dans la méthode d'initialisation. La description du service est stockée dans un objet membre de façon indépendante du format du fichier de description. L'accès est dans ce cas plus rapide lors de l'exécution propre du service qu'une recherche des informations dans l'arbre DOM (Document Object Model) correspondant au fichier de description du service.

Il comprend également une seconde servlet générique qui dérive de la première et qui est capable de lire le contenu d'un état et de préparer la page JSP générique ou bien de déléguer le traitement à une éventuelle servlet spécifique. Les éléments recherchés dans l'état sont :
- la liste des prompts à jouer ou le nom de la servlet spécifique si la liste des prompts est soumise à des conditions complexes (comme des informations de profil de l'appelant) ;
- la liste des grammaires à charger ;
- la liste des traitements de type "no inputs" qui peuvent être une liste de prompts ou une page à charger (c'est-à-dire une servlet ou une page JSP ou encore une page VoiceXML) ;
- la page à charger sur événement de type "no match" ;
- la page à charger sur événement nommé (« bloc "catch" ») ;
- la page à charger sur résultat de la grammaire, ou page suivante s'il n'y a pas de grammaire à charger ;
- le nom de l'état suivant s'il peut être directement décrit dans le fichier de description du service ou la servlet spécifique capable de trouver l'état suivant.

Il comprend aussi la page JSP générique qui permet de générer une page VoiceXML en utilisant les informations trouvées dans l'état courant. Le passage à l'état suivant se fait par l'évaluation d'une balise « <SUBMIT> » dont la source correspond à la page suivante indiquée par la servlet générique non abstraite lors de l'appel de la page JSP générique.

Le moteur de phases comprend enfin le fichier de description des caractéristiques des plateformes précité.

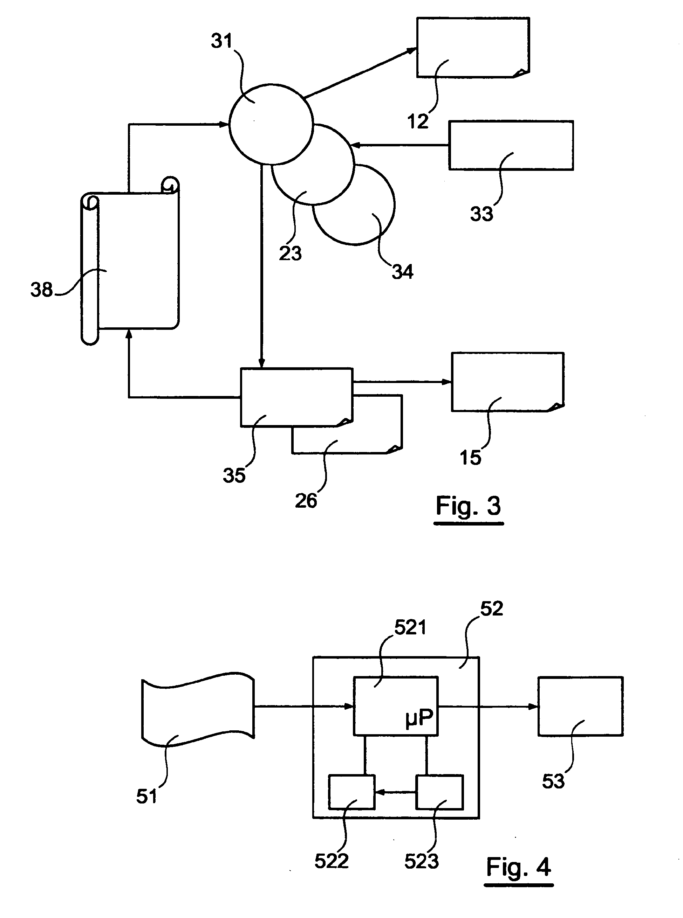

On présente, en relation avec la figure 3, le fonctionnement du serveur d'application lors de la mise en oeuvre du procédé de mise à disposition d'un service vocal interactif de la figure 1.

Ainsi, sur réception d'une requête provenant de la plateforme et comprenant par exemple des informations sur un état courant, un état suivant (s'il est connu), une cause de l'appel initiant l'exécution du service vocal interactif, un résultat de reconnaissance vocale, un nom d'événement, la servlet générique 31 du moteur de phase décode le fichier 12 de description du service.

Des éléments dynamiques et/ou complexes du service sont générés par des servlets spécifiques 23 référencées dans le fichier 12 de description du service. Certaines des servlets spécifiques peuvent utiliser un analyseur sémantique 33 dans le cadre, par exemple, de la mise en oeuvre du langage naturel.

La technique de l'héritage 34 peut être mise en oeuvre au niveau des servlets spécifiques 23.

La page JSP générique 35, ou la JSP spécifique 26, génère une page VoiceXML 38 du dialogue à partir :
- d'information sur un état courant et sur un état suivant (s'il est connu) ;
- d'une liste des guides ;
- des grammaire
- des DTMF ;
- des mots de commande ;
- d'une liste des événements à gérer ;
- d'une liste des guides et/ou page suivante sur inactivité ;
- d'une page suivante sur rejet (« no-match »)) ;
- d'au moins une caractéristique de la plateforme, extraite du fichier 15 de description des caractéristiques des plateformes.

La page VoiceXML ainsi générée est ensuite envoyée à la plateforme.

La servlet générique 31, le JSP générique 35 et le fichier 15 de description des caractéristiques des plates-formes font partie intégrante du moteur de phases. Ces éléments ne changent pas d'un service à l'autre.

Le fichier 12 de description du service, les servlets spécifiques 23 et la ou les JSP spécifiques 26 sont propres à chaque service et définissent les éléments complexes ou dynamiques du service.

La figure 4 présente enfin la structure d'un service vocal 52 selon l'invention, qui comprend une mémoire 522, et une unité de traitement 521 équipée d'un microprocesseur µP, qui est piloté par un programme d'ordinateur (ou application) 523. L'unité de traitement 521 reçoit en entrée une requête 51 provenant d'une plateforme. Le microprocesseur µP traite cette requête, selon les instructions du programme 523, pour générer des pages VoiceXML, qui sont transmises vers la plateforme 53.

En résumé, l'invention propose un procédé de mise à disposition d'un service vocal à partir d'un fichier de description (par exemple de type XML) comprenant des éléments génériques qui décrivent une partie du service vocal, et des composants logiciels spécifiques, coopérant avec un moteur de phases. Ce procédé présente de nombreux avantages, dont celui de décorréler efficacement les parties statiques et les parties dynamiques d'un service vocal, de façon à faciliter le développement et la maintenance de celui-ci. En effet, dans le cas d'une évolution, une mise à jour ou encore une correction du service vocal, seules les parties dynamiques sont traitées par le développeur du service. L'invention s'applique notamment à tous les types de services vocaux : les services en langage naturel, en détection de mots clés (par exemple selon la technique « multi-word spotting » ou « détection de mots clés »), en mots enrobés ou isolés mais aussi les services utilisant les interactions avec les touches du téléphone (par exemple DTMF).

### ANNEXE 1

<STATE name="Bienvenue">
<MEDIA type=" VOICE" id="1">
<GUIDE bargein="false" id="236">Bienvenue sur le service vocal</GUIDE>
<TRANSITION type="SERVLET_MANAGED">VxmlServletSuiteBienvenue</TRANSITION>
</MEDIA>
<STATE>
<STATE name="Menu">
<MEDIA type="VOICE" id=" 1">
<GUIDE id="SERVLET_MANAGED">VxmlServletGuideMenu</GUIDE>
<GRAMMAR type="DTMF" 1d="1">gram_etoile</GRAMMAR>
<GRAMMAR type="VOICE" id="2">reco1.srg</GRAMMAR>
<TRANSITION type="CONDITIONAL">
<TRANSCOND type="NO-INPUT" id=" 1 ">
<TRANITION type="STATE">SuiteMenu</TRANSITION>
</TRANSCOND>
<TRANSCOND type="DTMF" value="*" id="2">
<TRANSITION type="SERVLET_MANAGED">VxmlServletMenuDTMF</TRANSITION>
<TRANSCOND>
<TRANSCOND type="EVENT" value="connection.disconnect" id="3">
<TRANSITION type="STATE">Deconnexion<TRANSITION>
</TRANSCOND>
<TRANSCOND type="DEFAULT" id="4">
<TRANSITION type="SERVLET_MANAGED">VxmlServletMenuReco</TRANSITION>
</TRANSCOND>
<TRANSITION>
</MEDIA>
</STATE>

## Revendications

1. Procédé de mise à disposition d'un service vocal interactif au format VoiceXML, parmi un ensemble de services vocaux interactifs, sur une plateforme accessible à un terminal client, ladite plateforme constituant un élément intermédiaire entre ledit terminal et un serveur,
**caractérisé en ce que** ledit service vocal interactif comprend un fichier de description (12) décrivant ledit service et au moins un composant logiciel spécifique audit service,
lors de l'accès dudit terminal client audit service vocal interactif, le procédé comprend une étape d'interprétation dudit fichier de description (12) et dudit au moins un composant logiciel spécifique audit service,
ledit procédé comprend par ailleurs :
- une étape de génération d'une page de dialogue dudit service, au format VoiceXML, en fonction d'un état courant dudit dialogue et dudit fichier de description (12) ;
- une étape de délégation d'un traitement à réaliser par ledit service vocal audit composant logiciel spécifique en fonction dudit état courant dudit dialogue et dudit fichier de description (12) ;
et **en ce que** ledit serveur accède, lors de ladite étape de génération et de ladite étape de délégation, à un fichier de description de caractéristiques (15) de ladite plateforme, afin que ledit service vocal interactif soit adapté à ladite plateforme.

2. Procédé de mise à disposition selon la revendication 1, **caractérisé en ce que** ledit fichier de description (12) associé audit service comprend :
- au moins un élément statique (11) dudit service interprétable par un moteur de phases ; et/ou
- au moins un référencement vers au moins un second composant logiciel spécifique audit service, permettant de générer au moins un élément dynamique (13) et/ou complexe dudit service.

3. Procédé de mise à disposition selon la revendication 2, **caractérisé en ce que** ledit composant logiciel génère dynamiquement au moins une page de dialogue à partir d'au moins un standard prédéterminé.

4. Procédé de mise à disposition selon la revendication 1, **caractérisé en ce qu'**il est mis en oeuvre par un moteur de phase qui est générique pour ledit ensemble de services vocaux interactifs.

5. Procédé de mise à disposition selon l'une quelconque des revendications 3 à 4, **caractérisé en ce que** ledit moteur de phases (20) comprend des moyens de :
- décodage dudit fichier de description (12) associé audit service ;
- fourniture d'une liste d'au moins un prompt ;
- génération d'au moins une transition d'état dudit service ;
- chargement d'au moins une grammaire ;
- délégation d'au moins un traitement audit au moins un composant logiciel spécifique.

6. Procédé de mise à disposition selon la revendication 1, **caractérisé en ce que** ledit procédé est mis en oeuvre dans un serveur qui réalise également, sur requête (10) de ladite plateforme, une étape de génération d'au moins une page de dialogue dudit service à partir de certains au moins desdits éléments suivants :
- au moins un desdits éléments statiques (11) ;
- au moins un desdits éléments dynamiques (13) et/ou complexes ;
- au moins une caractéristique de ladite plateforme, extraite dudit fichier de description de caractéristiques (15) de ladite plateforme.

7. Procédé de mise à disposition selon la revendication 1, **caractérisé en ce que** lesdites pages de dialogue sont générées dynamiquement selon au moins un formalisme de description d'interactions prédéterminé.

8. Produit programme d'ordinateur (523) comprenant des instructions de code de programme pour l'exécution des étapes du procédé de mise à disposition d'un service vocal interactif selon l'une quelconque des revendications 1 à 7 lorsque ledit programme est exécuté dans et/ou par un processeur.

9. Serveur comprenant des moyens de génération d'au moins une page de dialogue d'un service vocal interactif au format VoiceXML parmi un ensemble de services vocaux interactifs, accessible sur une plateforme à un terminal client, ladite plateforme constituant un élément intermédiaire entre ledit terminal et ledit serveur,
**caractérisé en ce que** ledit serveur comprenant par ailleurs des moyens de commande permettant l'interprétation d'un fichier de description (12) décrivant ledit service et d'au moins un composant logiciel spécifique audit service,
de façon à permettre ladite génération de ladite page de dialogue,
ledit serveur comprenant par ailleurs :
- des moyens de génération d'une page de dialogue dudit service, au format VoiceXML, en fonction d'un état courant dudit dialogue et dudit fichier de description (12) ;
- des moyens de délégation d'un traitement à réaliser par ledit service vocal audit composant logiciel spécifique en fonction dudit état courant dudit dialogue et dudit fichier de description (12) ;
et **en ce que** ledit serveur comprend des moyens d'accès, lors de ladite génération et ladite délégation, à un fichier de description de caractéristiques (15) de ladite plateforme, afin que ledit service vocal interactif soit adapté à ladite plateforme.

## Claims

1. Method for providing an interactive voice service in voiceXML format, from a set of interactive voice services, on a platform accessible to a client terminal, said platform constituting an intermediate element between said terminal and a server, **characterized in that** said interactive voice service comprises a description file (12) describing said service and at least one software component specific to said service,
when said client terminal accesses said interactive voice service, the method comprises a step for interpretation of said description file (12) and said at least one software component specific to said service,
said method also comprises:
- a step for generation of a dialogue page of said service, in voiceXML format, according to a current state of said dialogue and of said description file (12);
- a step for delegation of a processing operation to be performed by said voice service to said specific software component according to said current state of said dialogue and of said description file (12);
and **in that** said server accesses, during said generation step and said delegation step, a description file (15) describing characteristics of said platform, in order for said interactive voice service to be adapted to said platform.

2. Provision method according to Claim 1, **characterized in that** said description file (12) associated with said service comprises:
- at least one static element (11) of said service that can be interpreted by a phase engine; and/or
- at least one referencing to at least one second software component specific to said service, making it possible to generate at least one dynamic and/or complex element (13) of said service.

3. Provision method according to Claim 2, **characterized in that** said software component dynamically generates at least one dialogue page from at least one predetermined standard.

4. Provision method according to Claim 1, **characterized in that** it is implemented by a phase engine which is generic for said set of interactive voice services.

5. Provision method according to any one of Claims 3 to 4, **characterized in that** said phase engine (20) comprises means for:
- decoding said description file (12) associated with said service;
- supplying a list of at least one prompt;
- generating at least one state transition of said service;
- loading at least one grammar;
- delegating at least one processing operation to said at least one specific software component.

6. Provision method according to Claim 1, **characterized in that** said method is implemented in a server which also carries out, on request (10) from said platform, a step for generating at least one dialogue page of said service from at least some of said following elements:
- at least one of said static elements (11);
- at least one of said dynamic and/or complex elements (13);
- at least one characteristic of said platform, extracted from said description file (15) describing characteristics of said platform.

7. Provision method according to Claim 1, **characterized in that** said dialogue pages are dynamically generated according to at least one predetermined interactions description formalism.

8. Computer program product (523) comprising program code instructions for executing the steps of the method for providing an interactive voice service according to any one of Claims 1 to 7 when said program is executed in and/or by a processor.

9. Server comprising means for generating at least one dialogue page of an interactive voice service in voiceXML format, from a set of interactive voice services, accessible on a platform to a client terminal, said platform constituting an intermediate element between said terminal and said server, **characterized in that** said server also comprises command means making it possible to interpret a description file (12) describing said service and at least one software component specific to said service, so as to enable said generation of said dialogue page, said server also comprising:
- means for generating a dialogue page of said service, in voiceXML format, according to a current state of said dialogue and of said description file (12);
- means for delegating a processing operation to be performed by said voice service to said specific software component according to said current state of said dialogue and of said description file (12);
and **in that** said server comprises means for accessing, during said generation and said delegation, a description file (15) describing characteristics of said platform, in order for said interactive voice service to be adapted to said platform.

## Patentansprüche

1. Verfahren zum Bereitstellen eines interaktiven Sprachdiensts im Format VoiceXML unter einer Einheit interaktiver Sprachdienste, auf einer Plattform, die für ein Client-Terminal zugänglich ist, wobei die Plattform ein Zwischenelement zwischen dem Terminal und einem Server bildet,
**dadurch gekennzeichnet, dass** der interaktive Sprachdienst eine Beschreibungsdatei (12), die den Dienst beschreibt, und mindestens einen Softwarebaustein, der für den Dienst spezifisch ist, aufweist.
beim Zugang des Client-Terminals zu dem interaktiven Sprachdienst, das Verfahren einen Auslegungsschritt der Beschreibungsdatei (12) und des mindestens einen Softwarebausteins, der für den Dienst spezifisch ist, aufweist,
wobei das Verfahren ferner Folgendes aufweist:
- einen Schritt des Erzeugens einer Dialogseite des Diensts im Format VoiceXML in Abhängigkeit von einem aktuellen Zustand des Dialogs und der Beschreibungsdatei (12),
- einen Schritt des Delegierens einer Verarbeitung, die von dem Sprachdienst an dem spezifischen Softwarebaustein in Abhängigkeit von dem aktuellen Zustand des Dialogs und der Beschreibungsdatei (12) auszuführen ist,
und dass der Server bei dem Schritt des Erzeugens und dem Schritt des Delegierens auf eine Beschreibungsdatei von Merkmalen (15) der Plattform zugreift, damit der interaktive Sprachdienst an die Plattform angepasst wird.

2. Verfahren zum Bereitstellen nach Anspruch 1, **dadurch gekennzeichnet, dass** die Beschreibungsdatei (12), die zu dem Dienst gehört, Folgendes aufweist:
- mindestens ein statisches Element (11) des Dienstes, das von einem Phasenmotor ausgelegt werden kann, und/oder
- mindestens eine Referenzierung zu mindestens einem zweiten Softwarebaustein, der für den Dienst spezifisch ist, die es erlaubt, mindestens ein dynamisches Element (13) und/oder komplexes Element des Diensts zu erzeugen.

3. Verfahren zum Bereitstellen nach Anspruch 2, **dadurch gekennzeichnet, dass** der Softwarebaustein dynamisch mindestens eine Dialogseite ausgehend von mindestens einem vorbestimmten Standard erzeugt.

4. Verfahren zum Bereitstellen nach Anspruch 1, **dadurch gekennzeichnet, dass** es von einem Phasenmotor umgesetzt wird, der für die Einheit interaktiver Sprachdienste generisch ist.

5. Verfahren zum Bereitstellen nach einem der Ansprüche 3 bis 4, **dadurch gekennzeichnet, dass** der Phasenmotor (20) Mittel:
- zum Dekodieren der Beschreibungsdatei (12), die zu dem Dienst gehört,
- zum Liefern einer Liste mit mindestens einem Prompt,
- zum Erzeugen mindestens eines Zustandsübergangs des Diensts,
- zum Laden mindestens einer Grammatik,
- zum Delegieren mindestens einer Verarbeitung an den mindestens einen spezifischen Softwarebaustein aufweist.

6. Verfahren zum Bereitstellen nach Anspruch 1, **dadurch gekennzeichnet, dass** das Verfahren in einem Server umgesetzt wird, der auf Anfrage (10) der Plattform auch einen Schritt des Erzeugens mindestens einer Dialogseite des Diensts ausführt, ausgehend von bestimmten mindestens der folgenden Elemente:
- von mindestens einem der statischen Elemente (11),
- von mindestens einem der dynamischen Elemente (13) und/oder komplexen Elemente,
- von mindestens einem Merkmal der Plattform, das aus der Beschreibungsdatei von Merkmalen (15) der Plattform extrahiert wird.

7. Verfahren zum Bereitstellen nach Anspruch 1, **dadurch gekennzeichnet, dass** die Dialogseiten dynamisch gemäß mindestens einem vorbestimmten Interaktions-Beschreibungsformalismus erzeugt werden.

8. Computerprogrammprodukt (523), das Programmcodeanweisungen für die Ausführung der Schritte des Verfahrens zum Bereitstellen eines interaktiven Sprachdiensts gemäß einem der Ansprüche 1 bis 7 aufweist, wenn das Programm in und/oder von einem Prozessor ausgeführt wird.

9. Server, der Mittel zum Erzeugen mindestens einer Dialogseite eines interaktiven Sprachdiensts im Format VoiceXML unter einer Einheit interaktiver Sprachdienste aufweist, der auf einer Plattform für ein Client-Terminal zugänglich ist, wobei die Plattform ein Zwischenelement zwischen dem Terminal und dem Server bildet,
**dadurch gekennzeichnet, dass** der Server ferner Steuermittel aufweist, die das Auslegen einer Beschreibungsdatei (12) gestatten, die den Dienst beschreibt, und mindestens einen Softwarebaustein, der für den Dienst spezifisch ist,
um das Erzeugen der Dialogseite zu erlauben,
wobei der Server ferner Folgendes aufweist:
- Mittel zum Erzeugen einer Dialogseite des Diensts im Format VoiceXML in Abhängigkeit von einem aktuellen Zustand des Dialogs und der Beschreibungsdatei (12),
- Mittel zum Delegieren einer Verarbeitung, die von dem Sprachdienst, an dem spezifischen Softwarebaustein in Abhängigkeit von dem aktuellen Zustand des Dialogs und der Beschreibungsdatei (12) auszuführen ist,
und dass der Server Mittel aufweist, um bei dem Erzeugen und bei dem Delegieren auf eine Beschreibungsdatei von Merkmalen (15) der Plattform zuzugreifen, damit der interaktive Sprachdienst an die Plattform angepasst wird.
